(19) Europäisches Patentamt / European Patent Office / Office européen des brevets

(11) **EP 3 436 691 B1**

(12) **FASCICULE DE BREVET EUROPEEN**

(45) Date de publication et mention
de la délivrance du brevet:
**25.11.2020 Bulletin 2020/48**

(21) Numéro de dépôt: **17720874.1**

(22) Date de dépôt: **30.03.2017**

(51) Int Cl.:
*F03D 3/06* (2006.01)          *B63H 1/08* (2006.01)
*F03B 17/06* (2006.01)

(86) Numéro de dépôt international:
**PCT/IB2017/051819**

(87) Numéro de publication internationale:
**WO 2017/168359 (05.10.2017 Gazette 2017/40)**

(54) **ROTOR FLUIDIQUE À PALES ORIENTABLES AVEC COMMANDE DE PALES PERFECTIONNÉE**

FLUIDISCHER ROTOR MIT AUSRICHTBAREN SCHAUFELN MIT VERBESSERTER SCHAUFELSTEUERUNG

FLUIDIC ROTOR HAVING ORIENTABLE BLADES WITH IMPROVED BLADE CONTROL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.09.2016 US 201662395441 P**

(43) Date de publication de la demande:
**06.02.2019 Bulletin 2019/06**

(73) Titulaire: **ADV Tech**
**33700 Merignac (FR)**

(72) Inventeur: **CURUTCHET, Arnaud**
**33700 Mérignac (FR)**

(74) Mandataire: **Le Forestier, Eric**
**LE FORESTIER CONSEIL**
**22, rue du Plateau Saint-Antoine**
**78150 Le Chesnay (FR)**

(56) Documents cités:
**WO-A1-2014/006603      JP-A- 2014 211 141**
**US-A- 5 324 164**

**Description**

Domaine de l'invention

La présente invention concerne d'une façon générale les rotors fluidiques à pales orientables destinées à travailler en milieu gazeux ou liquide, tant pour générer une énergie mécanique que pour propulser un mobile. Ces rotors s'appliquent notamment aux éoliennes, aux hydroliennes, aux propulseurs nautiques et aériens, ainsi qu'aux turbines en général.

Arrière-plan de l'invention

On connaît un tel rotor fluidique à pales orientables tel que défini dans le préambule de la revendication 1, notamment par les documents WO2014/006603A1 et WO2016/067251A1 au nom de la Demanderesse.
La structure de commande des pales décrite dans ces documents, bien qu'elle soit effective pour atteindre le but visé de l'oscillation des pales au cours de la rotation du rotor, n'en reste pas moins d'une certaine complexité.

Résumé de l'invention

L'invention vise à améliorer la structure de commande décrite dans ce document et à apporter au moins un des avantages suivants : plus grande simplicité, plus grande robustesse, plus grande facilité de réglages, industrialisation plus facile, meilleur comportement à des vitesses de rotations élevées.
On propose ainsi une machine tournante à rotor fluidique telle que définie dans la revendication 1.
De façon préférée mais facultative, cette machine comprend les caractéristiques additionnelles des revendications dépendantes, prises individuellement ou en toutes combinaisons que l'homme du métier appréhendera comme étant techniquement compatibles.

Brève description des dessins

D'autres aspects, buts et avantages de la présente invention apparaîtront mieux la lecture de la description détaillée suivante de formes de réalisation préférées de celle-ci, donnée à titre d'exemple non limitatif et faite en référence aux dessins annexés. Sur les dessins :

La Figure 1 est une vue schématique en élévation de côté d'une pale de rotor à pales orientables selon l'art antérieur,
La Figure 2 illustre schématiquement en vue de face et en éclaté deux éléments d'un dispositif de commande d'orientation de pales de rotor selon l'invention,
Les Figures 3A et 3B sont des vues schématiques respectivement de face et de profil de la coopération des éléments de la Figure 2 dans une première configuration,
Les Figures 4A et 4B sont des vues schématiques respectivement de face et de profil de la coopération des éléments de la Figure 2 dans une deuxième configuration,
La Figure 5 illustre la position mutuelle des éléments selon la deuxième configuration dans quatre positions angulaires,
La Figure 6 illustre en vue de face l'intégration du dispositif de commande des Figures 2 à 5 sur un bras de rotor à pales orientables,
La Figure 7 est une vue de profil de l'ensemble de la Figure 6,
La Figure 8 illustre la position mutuelle des différentes pièces de l'ensemble des Figures 7 et 8 dans quatre positions angulaires,
La Figure 9 donne un exemple de loi de calage angulaire obtenue avec le dispositif de commande d'orientation illustré sur les Figures 2 à 8,
La Figure 10 illustre en vue de face schématique une première partie d'un mécanisme de réglage d'amplitude de l'orientation des pales pouvant être mis en oeuvre dans un rotor à pales orientables,
La Figure 11 illustre en vue de face schématique d'une deuxième partie du mécanisme de réglage,
La Figure 12 illustre en vue de face schématique les deux parties du mécanisme de réglage d'amplitude dans une première position mutuelle,
La Figure 13 illustre en vue de face schématique les deux parties du mécanisme de réglage d'amplitude dans une deuxième position mutuelle, et
La Figure 14 illustre schématiquement un exemple d'un mécanisme de débrayage de la commande d'orientation des pales.

Description détaillée de formes de réalisation préférées

On se référera tout au long de la présente description au rotor tel que décrit dans la demande WO2014/006603A1. Les documents WO 2016/067251 A1, JP 2014211141 A et US 5324164 A décrivent aussi des rotors connus.

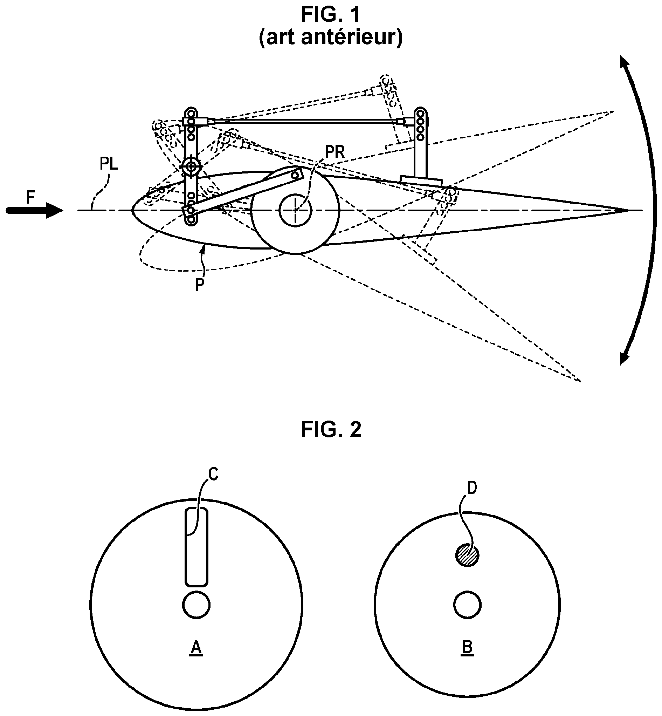

En référence tout d'abord à la Figure 1, si l'on se place dans le plan PL d'une pale P du rotor (par rapport à la direction F du flux gazeux ou liquide, le mouvement est un mouvement oscillatoire autour d'un point de rotation PR situé sur la pale.

Les éléments de base mis en œuvre dans la présente invention sont illustrés sur la Figure 2 : deux éléments A et B sont entraînés l'un par l'autre en tournant sur des axes parallèles. L'élément A est pourvu d'une gorge ou fente C pratiquée sur un de ses rayons. L'élément B est pourvu d'un doigt D, éloigné à une distance x du centre du disque. Le doigt D est prévu pour pouvoir coulisser dans la gorge ou fente C du disque A. On notera que la gorge ou fente C est traversante ou non, et de forme rectiligne ou non suivant la cinématique que l'on souhaite produire.

On notera ici que les diamètres et même la forme des éléments A et B sont inopérants ici, seuls comptant la position du doigt D par rapport à son propre axe de rotation et la position et la géométrie de la fente C par rapport à son propre axe de rotation.

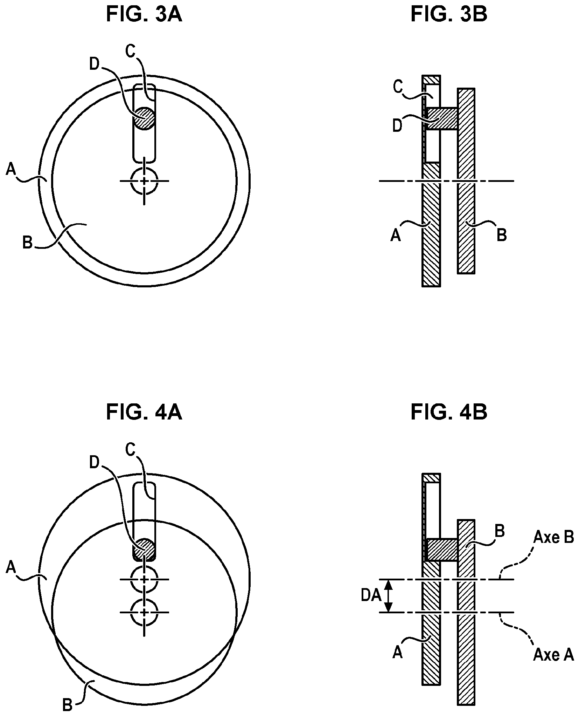

Sur les Figures 3A et 3B, les axes des éléments A et B sont confondus. L'un entraîne l'autre (et vice-versa) en phase, c'est à dire sans qu'il n'y a pas de décalage angulaire entre les deux éléments au cour de leur rotation.

Sur les Figures 4A et 4B, les axes des éléments A et B ne sont pas confondus (mais sont parallèles l'un à l'autre). Dans ce cas, l'élément A entraîne l'élément B (ou inversement), avec création d'un décalage angulaire de nature alternative entre les deux éléments au cours de la rotation.

On notera que pour que l'ensemble formé des éléments A et B puisse fonctionner, la longueur de déplacement du doigt D dans la gorge C doit pouvoir être le double de la distance DA de décalage entre les axes des éléments A et B, ce qui dicte la longueur de la gorge C pour qu'elle donne cette possibilité. Par ailleurs, la gorge C doit être assez large pour prévoir un jeu suffisant permettant le déplacement du doigt D dans ladite gorge en limitant les frottements. A cet égard, le doigt D peut être avantageusement être pourvu d'un roulement à billes pour assurer un bon glissement entre le doigt D et les parois de la gorge C. Ces parois peuvent par ailleurs être réalisées dans un matériau spécial prévu pour tenir à l'usure (traitement de surface, chromage, etc.). En variante, on peut prévoir pour la coopération fente/doigt un chariot à bille, une douille à bille, une glissière, etc.

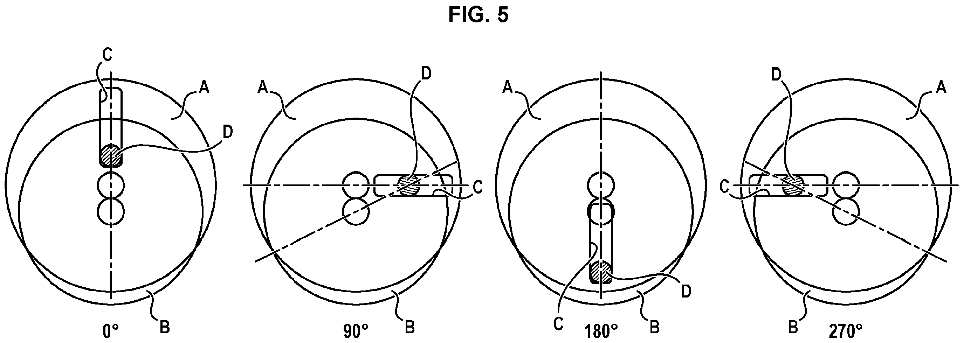

La Figure 5 illustre la cinématique obtenue avec une fente rectiligne, et en particulier la loi de calage générée pour quatre positions angulaires. On considère ici l'élément A pourvu de la gorge C comme référence angulaire, et on suppose que c'est l'élément A qui entraîne l'élément B, en tournant dans le sens horaire sur la Figure 5 (le raisonnement inverse mène au même résultat, au signe du décalage près). La loi de calage peut être résumée ainsi :

- position 0° : pas de décalage angulaire ;
- position à 90° : l'élément B est en retard de -x° par rapport à l'élément A ;
- position à 180° : pas de décalage angulaire ;
- position à 270° : l'élément B est en avance de +x° par rapport à l'élément A.

On comprend qu'en jouant sur les différents paramètres de la géométrie tels que la position, la forme et les dimensions de la gorge C, la position du doigt D par rapport à l'axe du disque B, la distance DA entre les axes de rotation des deux disques, un nombre infini de lois de calage différentes peut être obtenu. Des variations des lois de calage peuvent également être obtenues en choisissant de réaliser l'entraînement soit par l'élément portant la fente ou gorge, soit par l'élément portant le doigt.

Les lois de calage produites peuvent ainsi varier dans une vaste gamme en couvrant notamment des lois de type sinusoïdal et des lois de type trochoïdal.

A titre d'exemple, si l'on choisit une distance DA de 30mm entre les axes et de 50mm pour la position du doigt D par rapport au centre de rotation du disque B, l'amplitude du décalage angulaire x est de l'ordre de 36°.

On va maintenant décrire l'intégration du mécanisme dans un rotor du type général décrit dans WO2014/006603A1.

Dans ce document, la position angulaire de la nacelle lors de la rotation du rotor est assurée par l'intermédiaire d'une courroie (ou d'une chaine, ou de renvois d'angles, ou de pignons) s'engrenant autour d'une poulie située sur l'axe principal de rotation du rotor, poulie fixe dans l'absolu (mais pouvant être pilotée en mode récupérateur d'énergie pour assurer la position des pales par rapport à la direction du flux, ou en mode propulseur pour diriger le flux généré).

Dans la présente invention selon un premier mode de réalisation, cette liaison mécanique entraîne l'élément A pourvu de la gorge C (selon un second mode de réalisation de l'invention, ce pourrait être l'élément B pourvu du doigt D).

La pale P que l'on souhaite commander est connectée directement ou indirectement à l'élément B pourvu du doigt D. Ainsi l'ensemble nacelle, vilebrequin, bielle, renvoi et tringle du rotor du document WO2014/006603A1 disparaît.

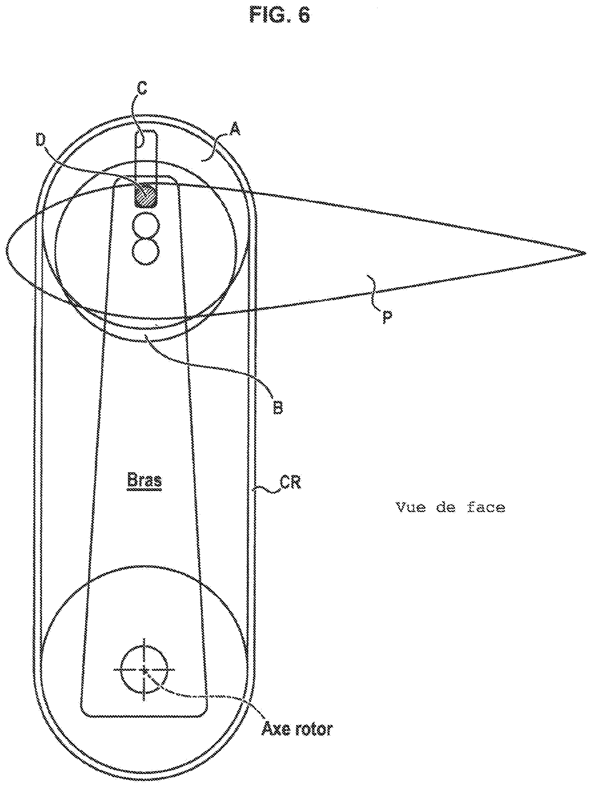

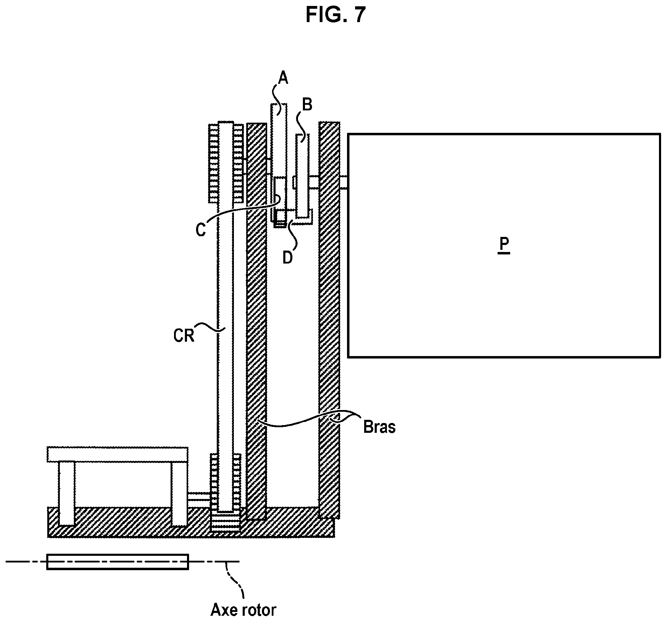

Les Figures 6 et 7 illustrent ce premier mode de réalisation : une courroie CR entraîne l'élément A, ici en forme de disque, et la pale P est solidaire en rotation de l'élément B, ici encore en forme de disque. La fente C est ici rectiligne.

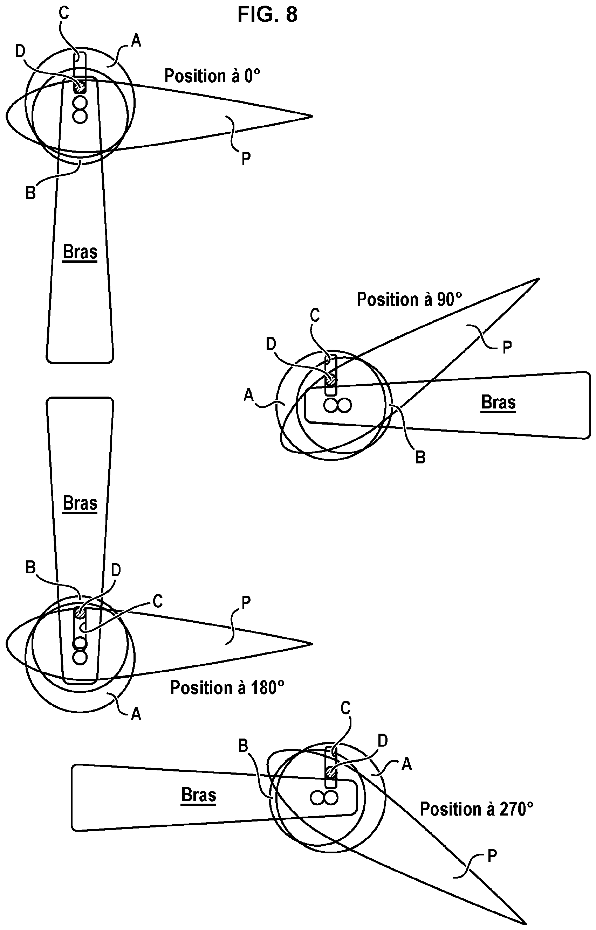

On suppose ici que le rotor tourne dans le sens antihoraire (c'est-à-dire en mode récupérateur, le flux moteur, gazeux ou liquide, venant de la gauche). Quatre positions mutuellement espacées de 90° sont illustrées sur la Figure 8. On obtient un effet d'orientation de la pale P analogue à celui décrit dans WO2014/006603A1. Naturellement, le mécanisme formé des éléments A et B et des moyens d'entraînement de l'élément A sont reproduits en autant d'exemplaires qu'il y a de pales P sur le rotor.

On comprend aisément à la vue des Figures 6 à 8 la grande simplicité et la grande robustesse de la solution mécanique de la présente invention.

On va maintenant expliciter la loi mathématique de déplacement angulaire de l'élément B par rapport à l'élément A (dans le cas d'une gorge droite et rectiligne).

Soit :

R la distance du doigt D par rapport à l'axe de rotation de l'élément B,
D la distance entre les axes de rotation des éléments A et B,

$$x = R/D,$$

$\alpha$ l'angle du disque A par rapport à la direction de référence Ox,
$\beta$ l'angle du disque B par rapport à la direction de référence Ox.

On comprend que si le décalage D entre les axes de rotation des deux disques est nul, alors aucun décalage angulaire n'apparaît entre les disques au cour de la rotation ; dans le cas d'un rotor à N pales, les pales se retrouveraient dans ce cas parallèles les unes par rapport aux autres. Ceci peut avoir un intérêt pour arrêter le rotor.

Le décalage angulaire entre l'élément B et l'élément A lors de la rotation des disques est très proche d'une loi sinusoïdale dont l'amplitude est directement proportionnelle à la valeur de x, selon l'équation suivante :

$$\cos(\beta) = \frac{\cos^2(\alpha) - 1 + \cos(\alpha)\sqrt{\cos^2(\alpha) - 1 + x^2}}{x}$$

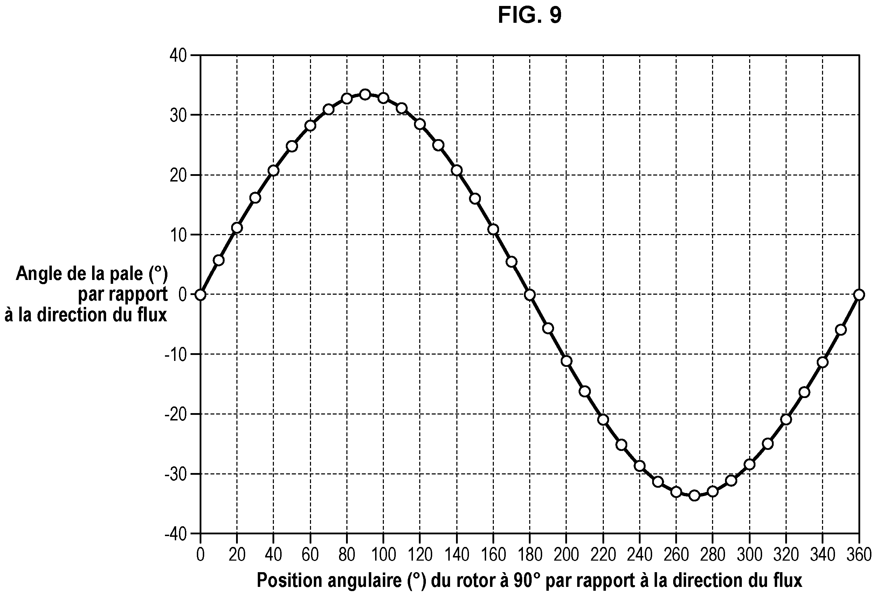

Le graphe de la Figure 9 illustre la loi de calage d'une pale repérée par rapport à la direction du flux (imaginons par commodité l'application éolienne) avec D=14mm, R=25,2mm, soit x =1,8.

On constate que la loi est très proche d'une loi sinusoïdale avec une amplitude ici de 33,75°.

On va maintenant aborder l'intégration des éléments dans le rotor et façon dont la loi de calage peut être réglée.

Si la position du doigt D est fixée par construction (même si selon un mode de réalisation la valeur R pourrait être variable), on comprend qu'il est intéressant de pouvoir contrôler la distance D entre les deux éléments A et B de manière à pouvoir ajuster la loi de calage en fonction de l'application et du régime de fonctionnement du rotor.

A titre d'exemple, en mode de fonctionnement éolien du rotor, il est pratique de pouvoir dégrader le rendement aérodynamique Cp à mesure que le vent forcit.

En mode propulseur il peut être souhaité de pouvoir faire varier la loi de calage en fonction du fonctionnement en basse ou en haute vitesse.

On observe sur les Figures 6 à 8 que les axes respectifs des disques A et B sont sur un même rayon du rotor qui les porte. Plus précisément, on observe que l'axe de rotation du disque A est plus éloigné de l'axe de rotation du rotor que l'axe de rotation du disque B (mais ce pourrait être l'inverse : axe du disque A plus proche de l'axe du rotor que l'axe du disque B).

Pour faire varier la loi de calage en amplitude, on a vu plus haut qu'on pouvait simplement faire varier la distance entre les axes de rotation des deux disques. Selon ce premier mode de réalisation où les deux disques ont leur axe de rotation sur un même rayon du rotor qui les porte, on peut envisager plusieurs solutions :

- soit on fait varier la position de l'axe de rotation du disque B et donc de la pale, ce qui toutefois peut présenter une certaine complexité technique au niveau de la commande,
- soit on fait varier la position de l'axe de rotation du disque A ; dans ce cas également cela peut être complexe ; en effet, si ce disque est entrainé par une courroie (ou une chaine) il faut maintenir la courroie en tension tout en maîtrisant le synchronisme entre le disque à la gorge et la poulie centrale ; et dans le cas d'une commande par renvois d'angle à 90°, il est possible d'avoir recours à des axes cannelés pour permettre le coulissement de la commande, mais là aussi techniquement cela peut s'avérer d'une certaine complexité ;

- soit encore on positionne l'axe de rotation du disque A à une distance r du centre de rotor, on positionne l'axe de rotation du disque B à la même distance r, et on monte les deux disques sur deux platines respectives que l'on peut décaler angulairement ; ainsi, pour faire varier la distance D on peut donc simplement décaler angulairement (par rapport à l'axe de rotation principal du rotor) les platines supportant les deux disques ; un avantage est que selon ce mode la distance r est fixe, et donc l'entraxe entre l'axe de rotation de chacun des disques A et B et le centre du rotor demeure fixe ; ceci permet d'éliminer les problèmes de tensions ou géométries variables des commandes par courroies, chaines ou engrenages (cascade pignons ou renvois d'angles à 90°), et de garder une distance fixe entre les axes des pales et l'axe du rotor.

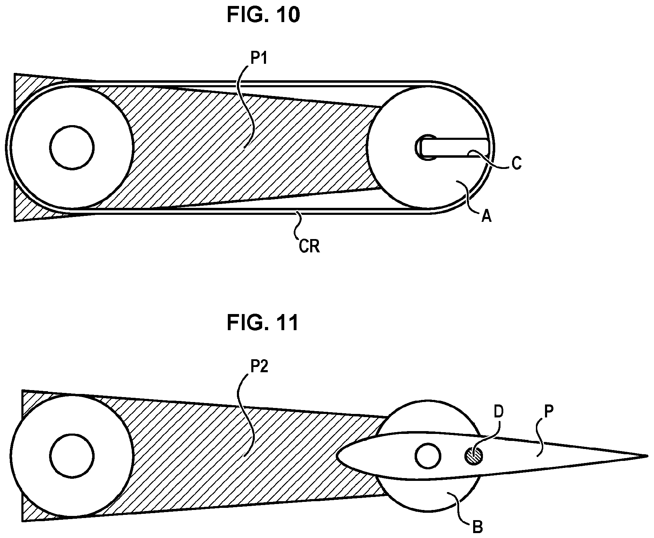

Les Figures 10 à 13 illustrent une mise en œuvre de cette troisième possibilité, avec un entraînement par courroie, pour une pale. Sur la Figure 10, on a illustré une platine P1 supportant le disque A muni de sa gorge C, ce disque A formant une poulie entrainée par la courroie CR. La courroie CR, montée sur une poulie fixe centrée sur l'axe du rotor et de même diamètre que la poulie A, maintient cette dernière dans une orientation absolue constante lors de la rotation du rotor.

Sur la Figure 11, on a illustré une platine P2 supportant l'élément B portant le doigt D, cet élément B entrainant la pale P.

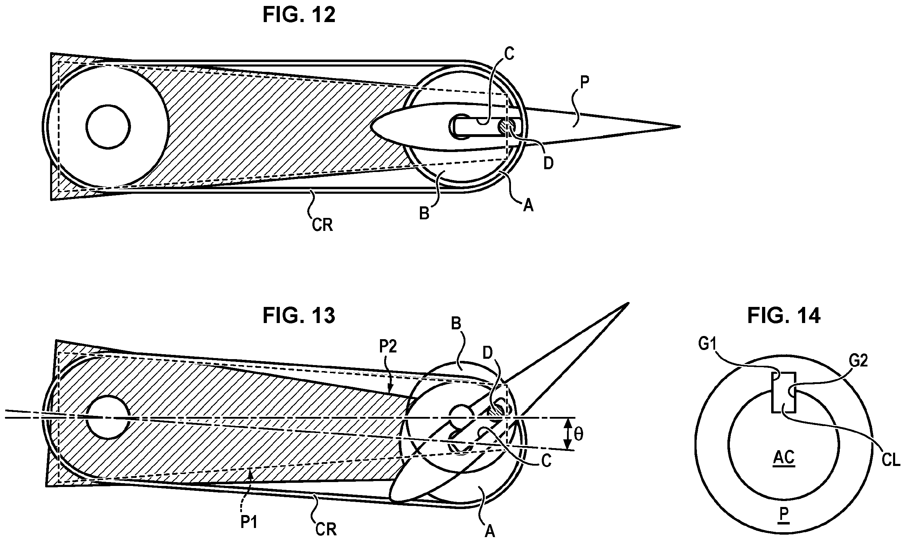

Sur la Figure 12, les platines occupent des positions telles qu'il n'existe pas de décalage angulaire entre elles : la distance DA (distance entre les axes de rotation des éléments A et B) est nulle, et il n'est donc créé aucun décalage angulaire entre les deux éléments A et B au cours de la rotation du rotor.

Sur la Figure 13, les platines P1 et P2 ont été déplacées l'une par rapport à l'autre pour créer un décalage angulaire $\theta$ entre les deux ; la distance DA est alors non nulle, et la rotation du rotor produit un décalage angulaire entre les deux éléments A et B au cours de la rotation du rotor, de façon à faire varier l'orientation de la pale P en correspondance.

Le réglage de la position angulaire mutuelle des deux platines entraîne donc une modification de la loi de calage.

Dans une réalisation basique, ce réglage peut être réalisé de manière statique au montage du rotor : par exemple, la platine P1 est munie de trous oblongs permettant de régler une fois pour toutes le décalage angulaire, en fonction des conditions et des contraintes de l'application désirée.

Dans certaines applications on préfère un réglage actif, où un dispositif de commande est apte à régler, en temps réel ou tout au moins avec une réactivité appropriée, le décalage angulaire entre les deux platines P1 et P2 pour avoir la meilleure loi de calage dans des conditions de fonctionnement données.

Dans une forme de réalisation, des actuateurs électriques directement installés sur les platines peuvent être utilisés, ceci impliquant d'amener une commande électrique depuis le support du rotor par l'intermédiaire de collecteurs tournants. On peut également prévoir un système avec commande sans fil pour piloter directement les actuateurs, ces derniers pouvant être alimentés soit par de petites génératrices entrainées par exemple par les courroies et organes associés (ou chaines, renvois d'angle, etc.), soit par un dispositif photovoltaïque.

Une solution préférée est toutefois de réaliser une commande purement mécanique à partir du centre du rotor jusqu'à chaque platine P1 ou P2 pour en assurer le réglage. Une architecture pour réaliser cela peut consister à un axe coulissant (translation) à l'intérieur de l'axe de rotation principal du rotor, le dit axe étant entraîné en translation soit par un actuateur (électrique, hydraulique, etc.) piloté par électronique, soit par un système purement mécanique du type régulateur de Watt. L'autre extrémité de cet axe de commande peut être reliée à un plateau cyclique monté sur roulement (l'axe de commande ne tourne pas avec le rotor, tandis que le plateau cyclique tourne avec le rotor). De ce plateau cyclique peuvent partir des chapes et rotules et renvois permettant de venir commander la position de chaque élément A par rapport à chaque élément B associé.

On va maintenant décrire une autre solution pour réaliser le réglage de la distance DA entre les axes de rotation des éléments A et B. Selon celle-ci, le disque A pourvu de la gorge C est maintenu avec une l'orientation angulaire fixe par rapport à la poulie centrale du rotor et est monté sur un chariot lui permettant de coulisser le long du bras du rotor de manière à diminuer ou augmenter la distance DA entre les axes de rotation des éléments A et B, via une commande ramenée au centre du rotor ou par l'intermédiaire d'actuateurs appropriés.

Les chaines ou les courroies ne pouvant en tant que telles faire face à cette variation de distance, une solution pour rendre ce réglage possible est un système de transmission à renvoi d'angle avec axe cannelé.

Il est toutefois possible de recourir à une solution à courroie ou chaine avec un système de mise en tension asservi.

Dans le cas notamment d'une application éolienne, une machine selon l'invention comprend avantageusement un dispositif de sécurité pour amener son rendement aérodynamique à zéro de manière à pouvoir gérer les conditions de tempête, ou encore pour en assurer la maintenance. Une approche pour mettre en œuvre cette sécurité consiste à libérer les mécanismes d'asservissement des pales de manière à ce que celles-ci deviennent libres sur leur axe respectif et se comportent comme des girouettes, annulant ainsi le moment qu'elles pourraient exercer sur le rotor. Un autre but est de pouvoir réenclencher simplement le système de commande sans avoir à régler à nouveau la loi de calage des pales.

la libération des mécanismes des pales est assuré en libérant les poulies agencées sur l'axe du rotor et qui entraînent les courroies (ou les pignons qui entraînent les chaînes). En référence à la Figure 14, ceci peut être réalisé en prévoyant qu'une poulie ou pignon P d'entraînement d'une courroie ou d'une chaîne possède une gorge G1, tandis que l'arbre central AC du rotor est pourvu d'une gorge G2. La référence CL désigne une clé apte à coulisser le long de l'axe AC dans la gorge formée conjointement par les gorges G1 et G2. à la fois par la gorge de l'axe et par la gorge de la poulie.

Le déclenchement de la clé CL peut être réalisé par une unité de commande électronique en réponse à des signaux de capteurs, ou encore en utilisant un système mécanique déclenché à partir d'une certaine vitesse de rotation du rotor, par exemple un système utilisant la force centrifuge type pendule de Watt, associé à une gâchette permettant de libérer la clé.

Bien entendu, la présente invention n'est nullement limitée aux formes de réalisation décrites ci-dessus et représentées sur les dessins, mais l'homme du métier saura y apporter de nombreuses variantes et modifications. En particulier :

- des limiteurs de couples (par exemples à billes) peuvent être placés sur la chaine cinématique de manière à assurer l'intégrité du rotor en cas d'utilisation hors des limites (par exemple en cas de tempête pour une éolienne) ; ces limiteurs de couple peuvent dans un mode de réalisation être installés entre chaque pale et l'élément B qui l'entraîne ;
- chaque pale peut être entrainée non pas par l'élément B portant le doigt D, mais par l'élément A portant la gorge ou fente C, l'élément B étant alors entraîné par la courroie, la chaîne ou autre moyen de transmission à partir du centre du rotor. Ceci aboutit à une loi de calage qui est la fonction inverse de celle réalisée lorsque la pale est entraînée par l'élément B et qui peut être préférable dans certains cas.

Par ailleurs, les mécanismes de réglage de l'amplitude de l'oscillation des pales (c'est-à-dire de la valeur x dans ce qui précède) peuvent être appliqués par l'homme du métier aux systèmes de commande de pales des documents WO2014/006603A1 et WO2016/067251A1.

L'invention s'applique comme on l'a dit au domaine éolien ou hydrolien ainsi qu'à la propulsion aérienne ou nautique. Elle s'applique également à la réalisation de turbines, auquel cas on prévoit un carénage autour du rotor pour guider le flux. On obtient dans ce cas un flux généralement uniforme sur toute la section balayée par le rotor, contrairement au cas de la majorité des turbines conventionnelles.

## Revendications

1.  Machine tournante à rotor fluidique, le rotor comprenant au moins une pale montée sur un bras tournant autour d'un arbre de rotor formant un axe principal du rotor, le rotor étant maintenu par une structure porteuse dans une orientation telle que ledit axe soit essentiellement perpendiculaire à la direction du flux du fluide, la pale étant montée pivotante autour d'un axe de rotation de pale parallèle à l'axe principal, chaque ensemble d'un bras et de la pale associée comprenant des moyens pour générer un mouvement d'oscillation relatif de la pale par rapport au bras au niveau de l'axe de rotation de pale, pour ainsi faire varier l'inclinaison de la pale lors de la rotation du rotor, lesdits moyens comprenant en bout de bras un mécanisme comprenant un premier élément tournant (A ; B) dit élément entraînant et un deuxième élément tournant (B ; A) dit élément entraîné, les éléments étant montés sur des axes de rotation parallèles entre eux et séparés d'une distance d'entraxe, l'orientation de l'élément entraînant étant commandée en fonction de l'orientation de l'arbre de rotor tandis que l'orientation de l'élément entraîné détermine l'orientation de la pale, **caractérisée en ce que** 'un des éléments tournants comprend un doigt (D) éloigné de son axe de rotation et l'autre élément tournant comprend une gorge (C) recevant le doigt et dans laquelle le doigt peut coulisser.

2.  Machine selon la revendication 1, dans laquelle ladite gorge (C) est rectiligne.

3.  Machine selon la revendication 1, dans laquelle ladite gorge (C) est non rectiligne.

4.  Machine selon l'une des revendications 1 à 3, dans laquelle la distance entre les deux extrémités de la gorge est au moins égale au double de la distance d'entraxe (DA).

5.  Machine selon l'une des revendications 1 à 4, laquelle comprend des moyens de réglage de la distance (DA) entre les axes de rotation des deux éléments.

6.  Machine selon la revendication 5, dans laquelle la distance entre l'axe de rotation principal du rotor et l'axe de rotation de l'élément entraînant (A ; B) est constante.

7. Machine selon la revendication 6, dans laquelle la distance entre l'axe de rotation principal du rotor et l'axe de rotation de l'élément entraîné (B ; A) est constant.

8. Machine selon les revendications 6 et 7 prises en combinaison, dans laquelle les distances entre l'axe de rotation principal du rotor et les axes de rotation de l'élément entraînant et de l'élément entraîné, respectivement, sont égales, dans laquelle l'élément entraînant et l'élément entraîné sont montés sur des supports susceptibles d'être ajustés angulairement.

9. Machine selon la revendication 8, dans laquelle l'ajustement angulaire est effectué autour de l'axe principal du rotor.

10. Machine selon la revendication 9, dans lequel le support pour l'élément entraîné est formé par le bras de la pale associée.

11. Machine selon l'une des revendications 1 à 10, comprenant des moyens de débrayage (G1, G2, CL) entre l'arbre de rotor et l'élément entraîné.

12. Machine selon la revendication 11, dans laquelle les moyens de débrayage sont prévus entre l'arbre de rotor et un organe en prise avec l'élément entraînant.

**Patentansprüche**

1. Rotationsfluid-Rotormaschine, wobei der Rotor mindestens einen Flügel bzw. ein Blatt aufweist, der an einem Arm montiert ist, der sich um eine Rotorwelle dreht, die eine Hauptachse des Rotors bildet, wobei der Rotor durch eine Stützstruktur in einer solchen Ausrichtung gehalten wird, dass die Achse im Wesentlichen senkrecht zu der Richtung der Fluidströmung ist, wobei der Flügel um eine zu der Hauptachse parallele Flügelrotationsachse schwenkbar montiert ist, wobei jede Anordnung aus einem Arm und dem zugehörigen Flügel Mittel zur Erzeugung einer relativen oszillierenden Bewegung des Flügels in Bezug auf den Arm an der Flügelrotationsachse umfasst, um dadurch die Flügelschrägstellung während der Drehung des Rotors zu verändern, wobei die Mittel an einem Ende des Armes einen Mechanismus umfassen, der ein als antreibendes Element bezeichnetes erstes Drehelement (A ; B) und ein als angetriebenes Element bezeichnetes zweites Drehelement (B ; A) umfasst, wobei die Elemente auf zueinander parallelen und durch einen Achsabstand voneinander getrennten Rotationsachsen montiert sind, wobei die Ausrichtung des antreibenden Elements in Abhängigkeit von der Ausrichtung der Rotorwelle gesteuert wird, während die Ausrichtung des angetriebenen Elements die Ausrichtung des Flügels bestimmt, **dadurch gekennzeichnet, dass** eines der Drehelemente einen von seiner Rotationsachse beabstandeten Finger (D) umfasst und das andere Drehelement eine Ausnehmung (C) umfasst, die den Finger aufnimmt und in der der Finger gleiten kann.

2. Maschine nach Anspruch 1, bei der die Ausnehmung (C) geradlinig bzw. gerade ist.

3. Maschine nach Anspruch 1, bei der die Ausnehmung (C) nicht geradlinig ist.

4. Maschine nach einem der Ansprüche 1 bis 3, bei der der Abstand zwischen den beiden Enden der Ausnehmung mindestens dem Doppelten des Achsabstands (DA) entspricht.

5. Maschine nach einem der Ansprüche 1 bis 4, die Mittel zur Einstellung des Abstands (DA) zwischen den Rotationsachsen der beiden Elemente umfasst.

6. Maschine nach Anspruch 5, bei der der Abstand zwischen der Hauptrotationsachse des Rotors und der Rotationsachse des antreibenden Elements (A; B) konstant ist.

7. Maschine nach Anspruch 6, bei der der Abstand zwischen der Hauptrotationsachse des Rotors und der Rotationsachse des angetriebenen Elements (B; A) konstant ist.

8. Maschine nach den Ansprüchen 6 und 7 in Kombination, bei der die Abstände zwischen der Hauptrotationsachse des Rotors und den Rotationsachsen des antreibenden Elements bzw. des angetriebenen Elements gleich sind, wobei das antreibende Element und das angetriebene Element auf winkelverstellbaren Trägern montiert sind.

9. Maschine nach Anspruch 8, bei der die Winkeleinstellung um die Hauptachse des Rotors erfolgt.

**10.** Maschine nach Anspruch 9, bei der der Träger für das angetriebene Element durch den Arm des zugehörigen Flügels gebildet ist.

**11.** Maschine nach einem der Ansprüche 1 bis 10, mit Ausrückmitteln (G1, G2, CL) zwischen der Rotorwelle und dem angetriebenen Element.

**12.** Maschine nach Anspruch 11, bei der die Ausrückmittel zwischen der Rotorwelle und einem mit dem antreibenden Element in Eingriff stehenden Teil vorgesehen sind.

**Claims**

**1.** Fluidic rotor rotary machine, the rotor comprising at least one blade mounted on an arm rotating about a rotor shaft forming a main axis of the rotor, the rotor being retained by a supporting structure in an orientation such that said axis is substantially perpendicular to the direction of the fluid flow, the blade being mounted so as to pivot about an blade rotational axis parallel to the main axis, each assembly of an arm and an associated blade comprising means for generating a relative oscillation movement of the blade with respect to the arm at the blade rotational axis, so as to thus vary the inclination of the blade during the rotation of the rotor, said means comprising, at the arm end, a mechanism comprising a first rotating member (A; B) so-called drive member and a second rotating member (B; A) so-called driven member, the members being mounted on mutually parallel axes of rotation and separated by an inter-axis distance, the orientation of the drive member being controlled as a function of the orientation of the rotor shaft while the orientation of the driven member determines the orientation of the blade, one of the rotating members comprising a finger (D) spaced apart from its axis of rotation and the other rotating member comprising a groove (C) which receives the finger and in which the finger can slide.

**2.** Machine according to claim 1, wherein said groove (C) is rectilinear.

**3.** Machine according to claim 1, wherein said groove (C) is not rectilinear.

**4.** Machine according to one of claims 1 to 3, wherein the distance between the two ends of the groove is at least equal to double the inter-axis distance (DA).

**5.** Machine according to one of claims 1 to 4, which comprises means for adjusting the distance (DA) between the axes of rotation of the two members.

**6.** Machine according to claim 5, wherein the distance between the main axis of rotation of the rotor and the axis of rotation of the drive member (A; B) is constant.

**7.** Machine according to claim 6, wherein the distance between the main axis of rotation of the rotor and the axis of rotation of the driven member (B; A) is constant.

**8.** Machine according to claims 6 and 7 taken in combination, wherein the distances between the main axis of rotation of the rotor and the axes of rotation of the drive member and the driven member, respectively, are equal, wherein the drive member and the driven member are mounted on supports capable of being adjusted angularly.

**9.** Machine according to claim 8, wherein the angular adjustment is performed about the main axis of the rotor.

**10.** Machine according to claim 9, wherein the support for the driven member is formed by the arm of the associated blade.

**11.** Machine according to one of claims 1 to 10, comprising disengagement means (G1, G2, CL) between the rotor shaft and the driven member.

**12.** Machine according to claim 11, wherein the disengagement means are provided between the rotor shaft and a member engaged with the drive member.

## FIG. 1
### (art antérieur)

## FIG. 2

**FIG. 3A**

**FIG. 3B**

**FIG. 4A**

**FIG. 4B**

FIG. 5

0°          90°          180°          270°

EP 3 436 691 B1

## FIG. 6

C

D

A

D

P

B

Bras

CR

Vue de face

Axe rotor

# FIG. 7

## FIG. 8

C
D
A
Position à 0°
P
B

Bras

Bras

Position à 90°
C
D
P
A
Bras
B

B D
C
P
Position à 180°
A

C
B
D
A
Bras
Position à 270°
P

FIG. 9

EP 3 436 691 B1

## FIG. 10

## FIG. 11

FIG. 12

FIG. 13

FIG. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014006603 A1
- WO 2016067251 A1
- JP 2014211141 A
- US 5324164 A